# EUROPEAN PATENT APPLICATION

(11) **EP 4 129 842 A1**
(43) Date of publication of application: **08.02.2023**
(21) Application number: 21777044.5
(22) Date of filing: 09.02.2021
(51) Int. Cl.: B65D 1/14, B65D 1/26, B65D 21/02

(54) **CONTAINER**

(30) Priority: 26.03.2020 JP 2020055903; 28.10.2020 JP 2020180280
(71) Applicant: Toyo Seikan Co., Ltd., Tokyo 141-8640 (JP)
(72) Inventor: MURASE Takeshi, Yokohama-shi, Kanagawa 230-0001 (JP); TANAKA Shouta, Yokohama-shi, Kanagawa 230-0001 (JP); SASAJIMA Nobuhiro, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2021/004750
(87) International publication number: WO 2021/192671

(57) **Abstract**

Provided is a container made of metal that reduces material costs and molding costs, has a lighter weight, is ideal for storage and transport while empty and for use while open, and is easy to recycle. A container (100) made of metal and open on an upper face side includes a body portion (110) formed into a shape in which, given 100% as a total height of the container, a line connecting an outer peripheral face at a height of 10% to an outer peripheral face at a height of 90% from a lowermost portion spreads outward at an angle of from 2° to 15° and, when two of the containers (100) are stacked, a projecting portion (112) of the container (100) above projecting upward has a height of 20 mm or less from an upper end of a container (110u) below.

## Description

### Technical Field

The present invention relates to a container made of metal, open on an upper face side, and including a bottom portion and a body portion.

### Background Art

In recent years, in order to conserve resources, reduce waste, and the like, there has been a growing demand for a lightweight, inexpensive, and easily recyclable container that can be used as an alternative to a container made of paper, plastic, and the like.

A container made of metal, open on an upper face side, and used as tableware or as a container to be filled with beverages, food, or the like is well known (refer to Patent Document 1 or the like), and can conceivably be applied.

### Citation List

### Patent Literature

Patent Document 1: JP 2003-128060 A

### Summary of Invention

### Technical Problem

As known containers open on an upper face side, containers made of metal that are washed and used many times, such as those used for tableware, are well known. However, because of the need to increase durability in consideration of long-term use, a certain plate thickness is necessary to increase strength, resulting in higher material costs and molding costs and a heavier weight, thus making the container a highly problematic alternative to containers made of paper, plastic, or the like.

In recent years, the recycling capabilities for metal can containers have improved, and using metal containers made of thin materials, such as the one in Patent Document 1, can now reduce material costs and molding costs and has a lighter weight, while saving resources and reducing waste, even if used only once as tableware.

Nevertheless, there is a problem in that a container made of metal and having an open upper face side is not suitable in shape or structure for being stored and transported while empty and being used by a user while open.

Further, the growing global awareness of the need to prevent environmental pollution, such as the ongoing pollution of the oceans caused by plastics, has led to a demand for containers made of a material that can be easily recovered for recycling.

The present invention has been made to solve such problems as described above, and an object of the present invention is to provide a container made of metal that reduces material costs and molding costs, has a lighter weight, is ideal for storage and transport while empty and for use while open, and is easy to recycle.

### Solution to Problem

A container according to the present invention is a container made of metal, open on an upper face side, and includes a bottom portion and a body portion. The body portion is formed into a shape in which, given 100% as a total height of the container, a line connecting an outer peripheral face at a height of 10% to an outer peripheral face at a height of 90% from a lowermost portion spreads outward at an angle of from 2° to 15°, and when two of the containers are stacked, a projecting portion projecting from the container below has a height of 20 mm or less from an upper end of the container below, thereby solving the above-described problem.

### Advantageous Effects of Invention

According to the container in claim 1, the container is made of metal and is easy to recycle, and the body portion is formed into a shape in which, given 100% as the total height of the container, the line connecting the outer peripheral face at the height of 10% to the outer peripheral face at the height of 90% from the lowermost portion spreads outward at an angle of from 2° to 15°, thereby forming a shape that increases strength, suppresses toppling when the container contains a beverage or the like and has a raised center of gravity and, at the same time, is easy to stack and easily held by a user.

Further, when two of the containers are stacked, the projecting portion of the container above projecting from the container below is at a height of 20 mm or less from the upper end of the container below, making it possible to shorten the height when a plurality of the containers are stacked.

Given 100% as the total height of the container, when the angle of the line connecting the outer peripheral face at the height of 10% to the outer peripheral face at the height of 90% from the lowermost portion exceeds 15°, the distance to the adjacent container when arranged upright increases, resulting in poor storage efficiency, and thus 10° or less is more suitable.

Given 100% as the total height of the container, when the angle of the line connecting the outer peripheral face at the height of 10% to the outer peripheral face at the height of 90% from the lowermost portion is less than 2°, it is more difficult to separate the stacked containers at the time of separation due to sticking or the like, and thus 3° or greater is more suitable.

According to the configuration described in claim 2, the bottom portion has a plate thickness of 0.20 mm or greater, which lowers the position of the center of gravity and improves self-standing stability.

Further, the bottom portion has a plate thickness of 0.35 mm or less, and the body portion has a plate thickness of from 0.10 to 0.22 mm in a range of height of 50 ± 10% given 100% as the total height of the container. This makes it possible to reduce the material costs and the molding costs and lighten the weight, and the bottom portion is formed into a shape in which, given 100% as the total height of the container, the line connecting the outer peripheral face at the height of 10% to the outer peripheral face at the height of 90% from the lowermost portion spreads outward at an angle of from 3° to 10°, resulting in a more suitable shape.

According to the configuration described in claim 3, a stack percentage, being a ratio of the projecting portion to a height of the container, is from 4% to 15%, making it possible reduce volume while ensuring ease of separation by preventing the containers from sticking when a plurality of the containers are stacked and the like, and making it possible to improve efficiency when storing and transporting the containers while empty.

According to the configuration described in claim 4, a more suitable container is obtained.

According to the configuration described in claim 5, it is possible to reliably prevent the body portions from being brought into close face contact with each other when a plurality of the containers are stacked and, when individually separating the stacked plurality of containers, ensure circulation of air between the containers and thus further improve ease of separation.

According to the configuration described in claim 6, a central dome portion having a dome shape that protrudes upward is provided, making it possible to ensure the strength of the bottom portion, and a ground contact rim portion having an annular shape that protrudes downward is provided, making it possible for the container to stably come into contact with the ground.

According to the configuration described in claim 7, the height of the central dome portion from a ground contact face of the ground contact rim portion is 12% or less of a panel diameter of the central dome portion, making it possible to ensure capacity when the container is filled with content, maintain a lower center of gravity, and thus make it possible for the container to more stably come into contact with the ground.

According to the configuration described in claim 8, a radius of curvature of the central dome portion is configured to be in a range of from 1.0 times to 6.0 times the panel diameter of the central dome portion, making it possible to ensure capacity when filled with content, maintain a lower center of gravity, and thus make it possible for the container to more stably come into contact with the ground.

According to the can in claims 9 to 12, it is possible to transport and transfer the containers in a stacked state when transporting and transferring the containers in filling equipment for beverages, food, or the like, lid attachment equipment, or the like, thereby improving efficiency when cans are manufactured by being filled with beverages, food, or the like, and then sealed or the like.

### Brief Description of Drawings

FIG. 1 is a side view of a container according to an embodiment of the present invention.
FIG. 2 is a side view of the container according to the embodiment of the present invention stacked.
FIG. 3 is a partially enlarged view of FIG. 2.
FIG. 4 is an explanatory view of a bottom portion of the container according to the embodiment of the present invention.
FIG. 5 is a reference view of a container according to another embodiment of the present invention.
FIG. 6 is a reference view of a container according to yet another embodiment of the present invention.

### Description of Embodiments

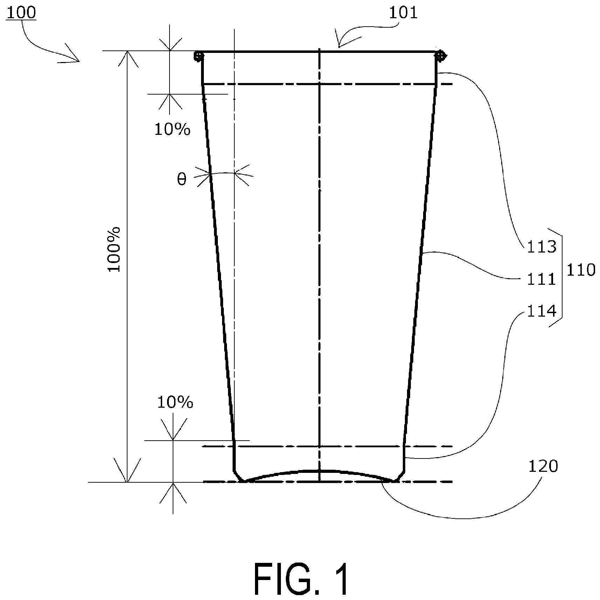

As illustrated in FIG. 1, a container 100, serving as an embodiment of the present invention, is an alternative form to well-known paper cups and plastic cups, and includes a bottom portion 120 and a body portion 110, is made of metal, and includes an upper opening 101 open on an upper face side.

The body portion 110 includes an intermediate side portion 111 that extends upwardly outward, an upper side portion 113 near the upper opening 101, and a lower side portion 114 leading to the bottom portion 120.

In the present embodiment, the intermediate side portion 111 has a uniform linear tapered shape in a cross-sectional view including a container centerline, and an angle θ is 5°.

Further, the upper side portion 113 and the lower side portion 114 do not spread outward.

As illustrated in FIG. 1, given 100% as a total height of the container, the intermediate side portion 111 is substantially formed from a height of 10% to a height of 90% from a lowermost portion at a uniform outward spread angle and thus, given 100% as the total height of the container, an angle spreading outward of a line connecting an outer peripheral face at the height of 10% to an outer peripheral face at the height of 90% from the lowermost portion is approximately 5°, which is substantially the same as θ.

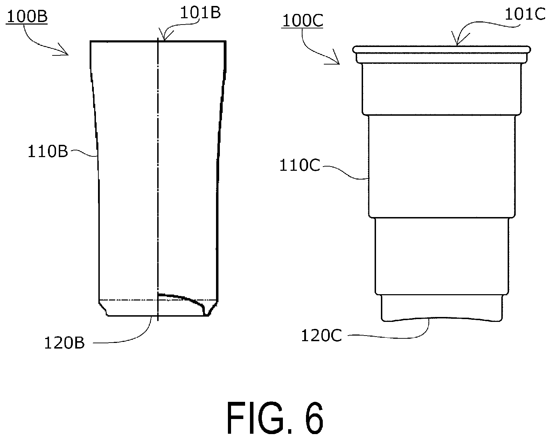

Note that, as in a container 100B illustrated in FIG. 6, the outward spread of a body portion 110B may be curved with the angle gradually changing in a cross-sectional view including the container centerline or, as in a container 100C illustrated in FIG. 6, a plurality of step portions may be formed in a body portion 110C, or a straight spread, a curved spread, a step portion, and the like may be combined.

At this time, as long as the container is formed into a shape spreading outward in which, given 100% as the total height of the container of the body portion 110, the angle spreading outward of the line connecting the outer peripheral face at the height of 10% to the outer peripheral face at the height of 90% from the lowermost portion is from 2° to 15°, a portion outside the range of from 2° to 15° may exist locally, as with the upper side portion 113 and the lower side portion 114 of the present embodiment.

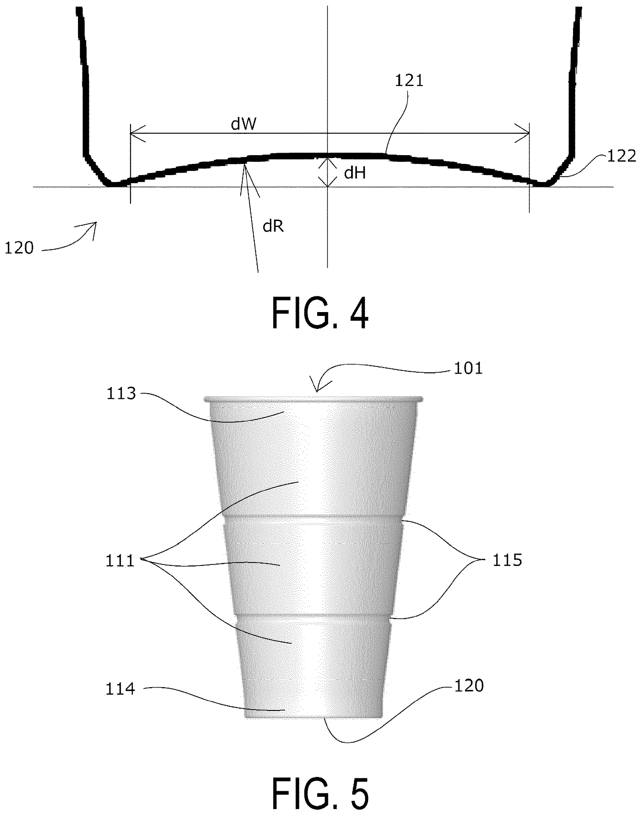

As illustrated in FIG. 4, the bottom portion 120 includes a central dome portion 121 having a dome shape that protrudes upward, and a ground contact rim portion 122 having an annular shape that protrudes downward on an outer side of the central dome portion 121 in a radial direction, and is formed so that lowermost points of the ground contact rim portion 122 protruding downward come into linear contact or face contact in an annular manner with the ground when the container 100 is set down.

Further, the shape of the central dome portion 121 is formed so as to satisfy dH/dW ≤ 12% and 1.0 ≤ dR/dW ≤ 6.0, where dH is a height (bottom sink) of an uppermost portion of the central dome portion 121 from a ground contact face of the ground contact rim portion 122, dW is a panel diameter of the central dome portion 121 (shortest distance between both outer peripheral ends of the central dome portion 121 in a cross section including the container centerline), and dR is the radius of curvature of the central dome portion 121 in the cross section including the container centerline, thereby increasing strength of the bottom portion and ensuring stability of the center of gravity and capacity.

Note that the radius of curvature dR of the central dome portion 121 in the cross section including the container centerline may be formed so as to change continuously or stepwise as long as the radius of curvature dR is within the range described above.

In the present embodiment, the ground rim contact portion 122 is formed into the same shape as that of well-known two-piece beverage cans, but is desirably formed with a narrow width as close to the outer periphery as possible.

Further, in the present embodiment, similarly to well-known two-piece beverage cans made of an aluminum alloy, the container is manufactured by pressing from a plate material of an aluminum alloy having a plate thickness of from 0.20 mm to 0.35 mm with a polyethylene terephthalate (PET) film of approximately 0.01 mm laminated on both sides.

As a result, the bottom portion in which the plate thickness of the material is substantially maintained when molded into a container has a plate thickness of from 0.20 mm to 0.35 mm, and the body portion 110 having a height of 50 ± 10% given 100% as the total height of the container has a plate thickness of from 0.10 to 0.22 mm.

In the present embodiment, with the container being used as a cup, an upper end portion of the body portion 110 is formed into a shape in which an end face thereof does not come into direct contact with a mouth.

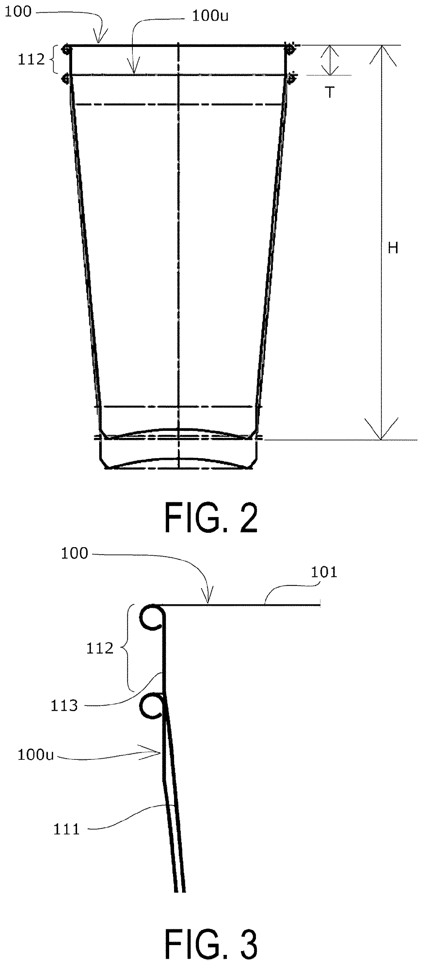

According to the container 100 having the shape of the present embodiment, when the container 100 is stacked on a container 100u as illustrated in FIG. 2 and FIG. 3, at least one of (1) vicinities near an outer face upper end of the intermediate side portion 111 of the container 100 above and an inner face upper end of the upper side portion 113 of the container 100u below, and (2) vicinities near an outer face lower end of the lower side portion 114 of the container 100 above and an inner face lower end of the intermediate side portion 111 of the container 100u below, or the like come into overlapping contact, and an outer face of the intermediate side portion 111 of the container 100 above and an inner face of the intermediate side portion 111 of the container 100u below do not come into close face contact.

On an upper end side of the container 100 above, a projecting portion 112 projects from an upper end of the container 100u below, and a projecting height T of the projecting portion 112 is determined by a height of the upper side portion 113, a height of the lower side portion 114, a shape of the bottom portion 120, and the like.

In the present embodiment, the projecting height T is 8.0 mm, and a stack percentage, being a ratio of the height T of the projecting portion to a height H of the container 100, is 7.1%.

Note that the upper side portion 113 and the lower side portion 114 may be formed so as to spread outward at an angle different from that of the intermediate side portion 111, and only one of these may be provided or neither may be provided.

Further, the upper side portion 113 and the lower side portion 114 may be formed so as to narrow inwardly.

In a case in which the upper side portion 113 and the lower side portion 114 do not exist or are extremely small and the shape of the container allows close contact between an outer face of the bottom portion 120 of the container 100 above and an inner face of the bottom portion 120 of the container 100u below when stacked, a bead 115, which is an independent contact portion that projects to an inner face side of the body portion 110 and comes into contact with an outer face of a container stacked above, may be provided as illustrated in FIG. 5, thereby preventing close face contact between an outer face of the body portion 110 of the container 100 above and an inner face of the body portion 110 of the container 100u below.

The bead may be of any shape, direction, quantity, and location, may project to the inner face side, may project to the outer face side, or a mixture of the inner and outer faces may exist.

Further, as long as the portion functions as a contact portion, the portion may be a projecting portion that projects at a point or across a face from the intermediate side portion 111 to the inner face side and/or the outer face side, rather than a bead shape.

Further, the container 100 may be used as a can filled with a beverage or the like and subsequently provided with a lid member.

The lid member may be any stay-on-tab lid made of metal, a sheet made of a layered body, a screw lid, or the like.

In a case in which the lid member is wound and tightened on the upper end of the body portion as a stay-on-tab lid, the upper end of the body portion of the container need only be subjected to trimming for the winding and tightening and subsequently subjected to flanging that forms a face portion.

In a case in which the lid member is bonded by heat or other means to the upper end of the body portion as a sheet composed of a layered body, the upper end of the body portion of the container may be imparted with a shape that includes a face portion to ensure the bonding area. Examples of the sheet composed of a layered body include aluminum foil, paper, a resin film, and a laminate material obtained by layering two or more of these, and a thermal adhesive layer (heat-sealed layer) may be further layered. As the thermal adhesive layer, a layer composed of an adhesive such as a known sealant film, a lacquer type adhesive, an easy peel adhesive, or a hot melt adhesive can be employed.

In a case in which the lid member is screw-fixed to the upper end of the body portion as a screw lid, the projecting portion 112 of the upper end portion 113 or the like of the upper end of the body portion of the container may include screw threads, or a lid member with a spout including separate screw threads may be wound and tightened around the upper end of the body portion of the container to screw-fix the screw lid.

By matching the projecting portion 112 to the attachment form of the lid member, it is possible to improve efficiency when storing and transporting the container portion regardless of the type of lid member.

### Reference Signs List

100 Container
101 Upper face opening
110 Body portion
111 Intermediate side portion
112 Projecting portion
113 Upper side portion
114 Lower side portion
115 Bead (contact portion)
120 Bottom portion
121 Central dome portion
122 Ground contact rim portion
θ Intermediate side portion angle
H Height of container
T Projecting portion height
dW Panel diameter of central dome portion
dH Bottom sink
dR Radius of curvature of central dome portion

## Claims

1. A container made of metal and open on an upper face side, the container comprising:
a bottom portion; and
a body portion, wherein
the body portion is formed into a shape in which, given 100% as a total height of the container, a line connecting an outer peripheral face at a height of 10% to an outer peripheral face at a height of 90% from a lowermost portion spreads outward at an angle of from 2° to 15°, and
when two of the containers are stacked, a projecting portion of the container above projecting upward has a height of 20 mm or less from an upper end of the container below.

2. The container according to claim 1, wherein
the bottom portion has a plate thickness of from 0.20 mm to 0.35 mm,
the body portion has a plate thickness of from 0.10 to 0.22 mm in a range of height of 50 ± 10% given 100% as the total height of the container, and
the bottom portion is formed into a shape in which, given 100% as the total height of the container, the line connecting the outer peripheral face at the height of 10% to the outer peripheral face at the height of 90% from the lowermost portion spreads outward at an angle of from 3° to 10°.

3. The container according to claim 1 or 2, wherein a stack percentage, being a ratio of the projecting portion to a height of the container, is from 4% to 15%.

4. The container according to claim 3, wherein the stack percentage, being the ratio of the projecting portion to the height of the container, is from 5% to 9%.

5. The container according to any one of claims 1 to 4, wherein the body portion includes a contact portion that, when the container is stacked with another container, comes into point or linear contact with the other container.

6. The container according to any one of claims 1 to 5, wherein
the bottom portion includes
a central dome portion having a dome shape that protrudes upward, and
a ground contact rim portion having an annular shape that protrudes downward on an outer side of the central dome portion in a radial direction.

7. The container according to claim 6, wherein a height of the central dome portion from a ground contact face of the ground contact rim portion is 12% or less of a panel diameter of the central dome portion.

8. The container according to claim 6 or 7, wherein a radius of curvature of the central dome portion in a cross section including a container centerline is configured to be in a range of from 1.0 times to 6.0 times a panel diameter of the central dome portion.

9. A can comprising:
the container according to any one of claims 1 to 8; and
a lid member attached to the container so as to close an opening of the container on the upper face side.

10. The can according to claim 9, wherein the lid member is a stay-on-tab lid made of metal.

11. The can according to claim 9, wherein the lid member is a sheet composed of a layered body.

12. The can according to claim 9, wherein the lid member is a screw lid.
